(19) Europäisches Patentamt
European Patent Office
Office européen des brevets

(11) Veröffentlichungsnummer: **0 155 316**
**B1**

(12) # EUROPÄISCHE PATENTSCHRIFT

(45) Veröffentlichungstag der Patentschrift: **08.06.88**

(51) Int. Cl.⁴: **C 08 K 5/09**, C 08 L 27/06

(21) Anmeldenummer: **84903537.3**

(22) Anmeldetag: **30.08.84**

(86) Internationale Anmeldenummer: **PCT/EP 84/00262**

(87) Internationale Veröffentlichungsnummer: **WO 85/01053 (14.03.85 Gazette 85/07)**

(54) **STABILISIERTE POLYVINYLCHLORID-FORMMASSEN.**

(30) Priorität: **05.09.83 DE 3332003**

(43) Veröffentlichungstag der Anmeldung: **25.09.85 Patentblatt 85/39**

(45) Bekanntmachung des Hinweises auf die Patenterteilung: **08.06.88 Patentblatt 88/23**

(84) Benannte Vertragsstaaten: **AT BE CH DE FR GB LI LU NL SE**

(56) Entgegenhaltungen:
**EP-A-0 024 353**
**EP-A-0 051 788**

(73) Patentinhaber: **Henkel Kommanditgesellschaft auf Aktien, Postfach 1100 Henkelstrasse 67, D-4000 Düsseldorf- Holthausen (DE)**

(72) Erfinder: **ERWIED, Werner, Bruchhauserweg 31, D-4010 Hilden (DE)**
Erfinder: **UPADEK, Horst, Im Sandforst 26, D-4030 Ratingen 6 (DE)**
Erfinder: **WEGEMUND, Bernd, Händelweg 3, D-5657 Haan 1 (DE)**

**EP 0 155 316 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung betrifft stabilisierte thermoplastische Formmassen auf Basis von Polyvinylchlorid oder im wesentlichen Vinylchlorid enthaltenden Polymerisaten.

Bei der formgebenden Verarbeitung von thermoplastischen Polymerisaten zu Rohren, Flaschen, Profilen, Folien und dergleichen, beispielsweise durch Extrudieren, Spritzgießen, Blasen, Tiefziehen und Kalandrieren, kann bei den dabei auftretenden hohen Temperaturen leicht ein Abbau des Kunststoffs eintreten. Dies führt zu unerwünschten Verfärbungen und zu einer Minderung der mechanischen Eigenschaften. Aus diesem Grund setzt man den Polymerisaten vor der Warmverformung Stabilisatoren zu, die einem solchen Abbau entgegenwirken. Für Polyvinylchlorid und im wesentlichen Vinylchlorid enthaltende Mischpolymerisate setzt man als Wärmestabilisatoren vor allem anorganische und organische Bleisalze, organische Antimonverbindungen, Organozinnverbindungen sowie Cadmium/Bariumcarboxylate und -phenolate ein. Die genannten Metallverbindungen werden gewöhnlich als Primärstabilisatoren bezeichnet; zur Verbesserung ihrer Wirksamkeit setzt man ihnen häufig Sekundär- oder Costabilisatoren zu. Weitere Einzelheiten über die für Vinylchloridpolymerisate gebräuchlichen Wärmestabilisatoren können der einschlägigen Literatur entnommen werden, beispielsweise der Encyclopedia of Polymer Science and Technology, Band 12, New York, London, Sydney, Toronto 1970, Seiten 737 bis 768.

Die genannten Stabilisatoren zeigen in der Praxis eine durchaus befriedigende Wirkung. Gegen den Einsatz von Blei- Antimon- und Cadmiumverbindungen bestehen jedoch gewisse Bedenken, insbesondere solche toxikologischer Art. Eine Reihe von Organozinnverbindungen ist toxikologisch unbedenklich, ihrem breiten Einsatz steht jedoch ihr hoher Preis entgegen. Aus diesem Grunde sucht man schon seit langem, diese Verbindungen durch weniger bedenkliche und preisgünstigere Substanzen zu ersetzen. In diesem Zusammenhang ist man dazu übergegangen, als Primärstabilisatoren fettsaure Salze aromatische Carboxylate und Phenolate der Metalle Calcium, Barium, Zink und Aluminium zu verwenden, die gegebenenfalls durch Costabilisatoren wie z. B. organische Phosphite, Iminoverbindungen, Epoxyverbindungen, mehrwertige Alkohole oder 1,3-Diketone ergänzt werden. Diese neueren Stabilisatorsysteme sind jedoch in mehr oder minder großem Maße mit dem Mangel behaftet, daß sie den zu stabilisierenden Formmassen eine zu geringe Anfangsstabilität und/oder eine zu geringe Langzeitstabilität verleihen. Es besteht daher ein Bedürfnis nach Substanzen, mit deren Hilfe sich die Anfangs- und/oder Langzeitwirkung derartiger Stabilisatorsysteme entscheidend verbessern läßt.

Es wurde gefunden, daß sich Alkalisalze von 2-Oxo- und 3-Oxocarbonsäuren mit Erfolg zur Stabilisierung von Polyvinylchlorid Formmassen verwenden lassen. Dabei wurde insbesondere festgestellt, daß diese Salze von Oxocarbonsäuren in der Lage sind, die stabilisierende Wirkung, insbesondere die Langzeitwirkung von Primärstabilisatoren auf Basis von Seifen, aromatischen Carboxylaten und Phenolaten der Metalle Calcium, Barium, Zink und Aluminium sowie von Organozinnverbindungen in nicht vorhersehbarem Maße zu erhöhen.

Gegenstand der Erfindung sind demnach stabilisierte Polyvinylchlorid-Formmassen, die Verbindungen der Formel I enthalten,

$$R-\overset{\overset{\displaystyle O}{\|}}{C}-(CH_2)_n-COOM \qquad (I)$$

in der R einen Alkylrest mit 1 bis 19 Kohlenstoffatomen, einen Cycloalkylrest mit 5 oder 6 Kohlenstoffatomen, einen Phenylrest, einen Alkylphenylrest mit 7 bis 11 Kohlenstoffatomen oder einen $MOOC-CH_2$-Rest, n die Zahlen 0 oder 1 und M Lithium, Natrium oder Kalium bedeutet.

Gegenstand der Erfindung sind insbesondere auch stabilisierte Formmassen, die eine Stabilisatorkombination aus (1) Primärstabilisatoren ausgewählt aus der aus Metallseifen, aromatischen Metallcarboxylaten, Metallphenolaten und Organozinnverbindungen bestehenden Gruppe und (2) Verbindungen der Formel I als Costabilisatoren sowie übliche Gleitmittel und gegebenenfalls andere Verarbeitungshilfsmittel enthalten.

Weiterhin sind Gegenstand der Erfindung Stabilisatorkombinationen für Polyvinylchlorid-Formmassen, die Primärstabilisatoren ausgewählt aus der aus Metallseifen, aromatischen Metallcarboxylaten, Metallphenolaten und Organozinnverbindungen bestehenden Gruppe und Verbindungen der Formel I als Costabilisatoren und gegebenenfalls übliche Gleitmittel und andere übliche Verarbeitungshilfsmittel enthalten.

Bei den Verbindungen der Formel I handelt es sich um bekannte Substanzen. Soweit diese Verbindungen oder die ihnen zugrundeliegenden freien Säuren nicht im Handel erhältlich sind, können sie nach bekannten Methoden der organischen Synthese hergestellt werden

Die durch die Formel I mit n = 0 definierten Salze von 2-Oxocarbonsäuren können beispielsweise durch Kondensation von Carbonsäureestern mit Oxalsäureestern und anschließende Ketonspaltung (siehe Houben-Weyl, Methoden der Organischen Chemie, Band 8, S. 581f und 435f (1952) erhalten werden.

Die durch die Formel I mit n = 1 beschriebenen Salze von 3-Oxocarbonsäuren sind beispielsweise durch Acylierung von Acetessigestern mit Carbonsäurechloriden, anschließende Spaltung mittels Alkoholat (siehe Houben-Weyl, Methoden der Organischen Chemie, Band 8, S. 610f und S. 616 sowie J. Am. Chem. Soc., 72, 1231 (1950)) und schonende Verseifung in verdünntem alkalischen Medium (Org. Synth. Coll., Vol 1, 351 (1948)) zugänglich.

Unter Metallseifen werden im Zusammenhang mit der Erfindung fettsaure Salze des Calciums, Bariums, Zinks und Aluminiums verstanden. Diese Metallseifen leiten sich vorzugsweise von Fettsäuren mit 8 bis 22 Kohlenstoffatomen ab. Die Fettsäurekomponente kann dabei insbesondere aus Capryl-, Caprin-, Laurin-, Myristin-, Palmitin-, Stearin- und Behensäure bestehen. Darüber hinaus kommen verzweigtkettige Fettsäuren wie 2-Ethylhexansäure, 2-Hexyldecansäure und 2-Octyldodecansäure und Hydroxyfettsäuren, beispielsweise 9, (10)-Hydroxystearinsäure, 9,10-Dihydroxystearinsäure und 9, (10)-Hydroxy-10, (9)-methoxystearinsäure in Betracht. Die erfindungsgemäßen Zusammensetzungen können sowohl Salze einzelner Fettsäuren als auch Salze von Fettsäuregemischen enthalten, wie sie aus natürlichen Fetten und Ölen gewonnen werden.

Als aromatische Metallcarboxylate kommen vor allem die Calcium-, Barium-, Zink- und Aluminiumsalze der Benzoesäure und substituierter Benzoesäuren, insbesondere alkylsubstituierter Benzoesäuren, in Betracht.

Als Metallphenolate kommen die Phenolate, Alkylphenolat- und Naphthenate des Calciums, Bariums, Zinks und Aluminiums in Betracht. Auch sogenannte überbasische Phenolate oder Naphthenate sind brauchbare Zusätze.

Als Organozinnverbindungen kommen vor allem die Dialkylverbindungen des vierwertigen Zinns in Betracht, beispielsweise Dimethylzinn-S,S-bis-(isooctylthioglykolat), Dibutylzinndilaurat, Dibutylzinnmaleinat, Dibutylzinn-bis-(monobutylmaleinat), Dibutylzinnbis-(monobutylmaleinat), Dibutylzinnbis-(laurylmercaptid), Dibutylzinn-β-mercaptopropionat, Dibutylzinn-S,S-bis-(isooctylthioglykolat), Di-n-octylzinnmaleinat, Di-n-octylzinnbis-(monoethylmaleinat), Di-n-octylzinn-β-mercaptopropionat und Di-n-octylzinn-S,S-bis-(isooctylthioglykolat), ferner Monoalkylzinnverbindungen wie z. B. Monomethylzinntris-(isooctylthioglykolat) und Mono-n-octylzinntris-(isooctylthioglykolat), wobei die Monoalkylverbindungen des vierwertigen Zinns vorzugsweise in Abmischungen mit Dialkylzinnverbindungen eingesetzt werden.

Die stabilisierten Polyvinylchlorid-Formmassen enthalten in der Regel auf 100 Gewichtsteile Polymerisat 0,02 bis 5 Gewichtsteile Verbindungen der Formel I. Die Metallseifen, aromatischen Metallcarboxylate und Metallphenolate können in Mengen von 0,05 bis 5 Gewichtsteilen pro 100 Geiwichtsteile Polymerisat anwesend sein.

In einer speziellen Ausführungsform der Erfindung enthalten die Polyvinylchlorid-Formmassen auf 100 Gewichtsteile Polymerisat 0,1 bis 3 Gewichtsteile Calciumseife und/oder 0,1 bis 3 Gewichtsteile Bariumseife und/oder 0,1 bis 3 Gewichtsteile Zinkseife, wobei sich die Seifen vorzugsweise von Fettsäuren mit 8 bis 22 Kohlenstoffatomen ableiten und der Gesamtanteil der Metallseifen normalerweise 3 Gewichtsteile pro 100 Gewichtsteile Polymerisat nicht übersteigt.

In vielen Fällen kann es günstig sein, den Polyvinylchlorid-Formmassen auf 100 Gewichtsteile Polymerisat 0,2 bis 5 Gewichtsteile eines synthetischen, kristallinen, 13 bis 25 Gewichtsprozent gebundenes Wasser enthaltenden, feinteiligen Natriumalumosilikats zuzusetzen, das - bezogen auf die wasserfreie Form - die Zusammensetzung 0,7 bis 1,1 $Na_2O \cdot Al_2O_3 \cdot 1{,}3 - 2{,}4\ SiO_2$ hat.

Bei den oben definierten Natriumalumosilikaten handelt es sich um Zeolithe vom Typ NaA, die einen durchschnittlich wirksamen Porendurchmesser von 4 Å ($4 \times 10^{-10}$m) besitzen, weshalb sie auch als Zeolithe 4 A beizeichnet werden. Die Verwendung dieser Zeolithe als Hilfsmittel bei der Verarbeitung von Thermoplasten ist bekannt, siehe beispielsweise US-PS-4 000 100 und EP-A-0 027 588.

Weiterhin kann es von Vorteil sein, den Polyvinylchloridformmassen auf 100 Gewichtsteile Polymerisat 0,2 bis 5 Gewichtsteile Verbindungen der Formeln II und/oder III

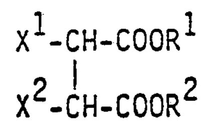

. (II)

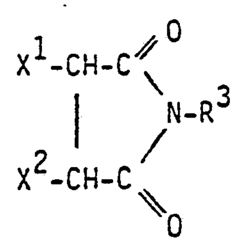

- (III)

zuzusetzen, in denen $X^1$ und $X^2$ unabhängig voneinander Wasserstoff oder die SH-Gruppe bedeuteten, wobei mindestens einer der Substituenten $X^1$ und $X^2$ eine SH-Gruppe darstellt und in denen $R^1$, $R^2$ und $R^3$ geradkettige und verzweigte Alkylreste mit 5 bis 22 Kohlenstoffatomen, vorzugsweise 6 bis 18 Kohlenstoffatome bedeuten.

Die Verbindungen der Formel II und III stellen bekannte Substanzen dar, die nach gängigen Methoden der organischen Synthese erhalten werden können.

Die durch die Formel II definierten Dialkylester der Mercaptobernsteinsäure und der 2,3-Dimercaptobernsteinsäure werden zweckmäßigerweise durch Veresterung der mercaptosubstituierten Bernsteinsäuren mit entsprechenden Alkanolen, gegebenenfalls in Gegenwart von Veresterungskatalysatoren

nach den für die Veresterung von Carbonsäuren mit Alkoholen üblichen Verfahren (siehe hierzu beispielsweise Houben-Weyl: Methoden der organischen Chemie, 4. Auflage, Band S, Stuttgart 1952, Seiten 516 - 528) hergestellt.

Die durch die Formel III definierten N-Alkylimide der Mercapto bernsteinsäure und der 2,3-Dimercaptobernsteinsäure können beispielsweise durch Umsetzung der mercaptosubstituierten Bernsteinsäuren, ihrer Ester oder Anhydride mit entsprechenden Alkylaminen erhalten werden. Bezüglich der dabei einzuhaltenden Bedingungen wird auf Houben-Weyl: Methoden der organischen Chemie, 4. Auflage, Band 11/2, Stuttgart 1958, Seiten 4-9 und Seiten 20-25 sowie auf Methodicum Chimicum, Band 6, Stuttgart 1975, Seiten 681-682 verwiesen.

Neben den genannten Zusätzen können die erfindungsgemäßen Polyvinylchlorid-Formmassen Partialester aus Polyolen mit 2 bis 6 Kohlenstoffatomen und 2 bis 6 Hydroxylgruppen und Fettsäuren mit 8 bis 22 Kohlenstoffatomen als Gleitmittel mit stabilisierender Wirkung enthalten. Diese Partialester besitzen pro Molekül im Durchschnitt mindestens eine freie Polyol-Hydroxylgruppe und können durch Veresterung entsprechenden Polyole mit Fettsäuren der angegebenen Kettenlänge - gegebenenfalls in Gegenwart von üblichen Veresterungskatalysatoren - hergestellt werden. Polyole und Fettsäuren werden dabei im Molverhältnis 1 : 1 bis 1 : (n-1) miteinander umgesetzt, wobei n die Anzahl der Hydroxylgruppen des Polyols bedeutet. Vorzugsweise setzt man die Komponenten in solchen Mengen ein, daß sich Partialester mit einer OH-Zahl zwischen 140 und 580, insbesondere zwischen 170 und 540 bilden. Das Reaktionsprodukt, das jeweils ein Estergemisch darstellt, soll eine Säurezahl unter 15, vorzugsweise unter 8, haben. Geeignete Polyolkomponenten sind Ethylenglykol, Propylenglykol-1,2, Propylenglykol-1,3, Butylenglykol-1,2, Butylenglykol-1,4, Hexandiol-1,6, Neopentylglykol, Trimethylolethan, Erythrit, Mannit und Sorbit sowie insbesondere Glycerin, Trimethylolpropan, Ditrimethylolpropan, Pentaerythrit und Dipentaerythrit. Als geeignete Fettsäurekomponenten seien beispielsweise Capryl-, Caprin-, Laurin-, Myristin-, Palmitin-, Stearin- und Behensäure genannt. Es können auch synthetische Fettsäuren der erwähnten Kohlenstoffzahl oder ungesättigte Fettsäuren, wie Ölsäure und Linolensäure, oder auch substituierte Fettsäuren, insbesondere hydroxylierte Säuren die 12-Hydroxystearinsäure eingesetzt werden. Aus praktischen Gründen setzt man zumeist Gemische von Fettsäuren ein, wie sie aus natürlichen Fetten und Ölen gewonnen werden.

Die erfindungsgemäßen Polyvinylchlorid-Formmassen enthalten die Polyolpartialester in der Regel in Mengen von 0,2 bis 2,0 Gewichtsteilen auf 100 Gewichtsteile Polymerisat.

Es kann auch von Vorteil sein, wenn die erfindungsgemäßen Polyvinylchlorid-Formmassen Thioglykolsäureester von Alkoholen mit 1 bis 6 Hydroxylgruppen und 3 bis 36 Kohlenstoffatomen enthalten. Hier kommen Thioglykolsäureester mit relativ geringer Flüchtigkeit in Betracht, beispielsweise Thioglykolsäureester aus Glycerins, Trimethylolpropans, der isomeren Octanole, des Decanols, der Guerbetalkohole aus Octanolen, oder auch technischer dimerisierter Fettalkohole. Diese Ester können auch freie Hydroxylgruppen aufweisen; ebenso ist es möglich, Gemische aus Thioglykolsäureestern und freien mehrwertigen Alkoholen einzusetzen.

Die erfindungsgemäßen Polyvinylchlorid-Formmassen können die genannten Thioglykolsäureester in engen von 0,1 bis 10 Gewichtsteilen auf 100 Gewichtsteile Polymerisat enthalten.

Weiterhin kann gegebenenfalls eine günstige Wirkung erzielt werden, wenn in den erfindungsgemäßen Polyvinylchlorid-Formmassen 1,3-Dicarbonylverbindungen vorhanden sind. Im allgemeinen kommen solche 1,3-Diketone in Frage, die wenigstens zwei Alkyl-, Aryl- oder Aralkylreste, beispielsweise Dodecyl-, Hexadecyl-, Octadecyl-, Phenyl- oder Benzylreste im Molekül enthalten. Typische Vertreter dieser Substanzklasse sind Palmitoylstearoylmethan oder Stearoylbenzoylmethan.

Die erfindungsgemäßen Polyvinylchlorid-Formmassen können solche 1,3-Dicarbonylverbindungen in Mengen von 0,1 bis 5 Gewichtsteilen auf 100 Gewichtsteile Polymerisat enthalten.

Die erfindungsgemäßen Polyvinylchlorid-Formmassen können weitere Hilfsstoffe und Verarbeitungshilfsmittel enthalten, beispielsweise wachsartige Kohlenwasserstoffe wie Paraffine mit einem Erstarrungspunkt im Bereich von 40 bis 105°C und/oder niedermolekulare Polyethylensorten, deren Erweichungspunkt unterhalb von 140°C liegen soll. Zweckmäßigerweise werden diese wachsartigen Substanzen mit freien Fettsäuren kombiniert, wobei Fettsäuren mit 12 bis 22 Kohlenstoffatomen, wie sie aus natürlichen Fetten und Ölen zugänglich sind, bevorzugt werden. Besonders günstige Ergebnisse werden mit Palmitin- und Stearinsäure erhalten. Auch handelsübliche Fettalkohole mit 12 bis 22 Kohlenstoffatomen können in den erfindungsgemäßen thermoplastischen Formmassen enthalten sein.

Als weitere Additive kommen bestimmte Polymerisate in Betracht, beispielsweise solche auf Basis von Methylmethacrylat, Methylmethacrylat/Butylacrylat, Ethylacrylat, Methylmethacrylat/Acrylsäure und Butylmethacrylat/Styrol. Derartige Polymerisate und Copolymerisate werden als flow promoter bezeichnet. Polymerisate aus Butylacrylat wirken bei der formgebenden Verarbeitung von Polyvinylchlorid-Formmassen auch als Trennmittel.

In bestimmten Fällen kann es von Vorteil sein, wenn die erfindungsgemäßen Polyvinylchlorid-Formmassen Antioxydationsmittel enthalten. Hier kommen beispielsweise Diphenylolpropan, 2,5-Bis-(1,1-dimethylpropyl)-hydrochinon, 2,6-Di-tert.-butyl-4-methylphenol, Octadecyl-(3,5-Di-tert.-butyl-4-hydroxylphenyl)-propionat, 1,1,3-Tris-(5-tert.-butyl-4-hydroxy-2-methylphenyl)-butan oder Dilaurylthiodipropionat in Betracht.

Polyvinylchlorid-Formmassen, die für die Herstellung von Hohlkörpern und Folien bestimmt sind, können auf 100 Gewichtsteile Polymerisat 0,5 bis 5 Gewichtsteile epoxydiertes Sojaöl und 0,1 bis 0,8 Gewichtsteile höhermolekulares Esterwachs enthalten. Als hochmolekulare Esterwachse kommen Montanwachse,

Paraffinoxydate und Komplexester in Betracht.

Die Basis der erfindungsgemäßen stabilisierten thermoplastischen Formmassen besteht aus Homopolymerisaten oder Mischpolymerisaten des Vinylchlorids. Die Mischpolymerisate enthalten wenigstens 50 Molprozent, vorzugsweise wenigstens 80 Molprozent Vinylchlorid. Die Polymerisate können auf beliebigem Wege, beispielsweise durch Suspensions-, Emulsions- oder Blockpolymerisation hergestellt worden sein. Ihr K-Wert kann zwischen etwa 35 und 80 liegen. In den Rahmen der Erfindung fallen auch Formmassen auf Basis von nachchloriertem Polyvinylchlorid sowie solche auf Basis von Harzgemischen, die überwiegend Homopolymerisate oder Copolymerisate des Vinylchlorids enthalten. Den Begriff Polyvinylchlorid-Formmassen erfaßt erfindungsgemäß sowohl die zur Verformung bestimmten Halbfertigprodukte als auch aus diesen Massen beliebig geformte Artikel.

Die einzelnen Komponenten der erfindungsgemäßen Polyvinylchlorid-Formmassen können durch Vermischen der Bestandteile in konventionellen Mischern vereinigt werden. Es ist dabei möglich, zunächst die verschiedenen Komponenten der Stabilisatorkombination miteinander zu vermischen und dieses Gemisch dann mit dem Polyvinylchlorid-Basismaterial zu vereinigen.

Die erfindungsgemäßen Stabilisatorkombinationen für Polyvinylchlorid-Formmassen bestehen im einfachsten Fall aus einem Primärstabilisator ausgewählt aus der Gruppe bestehend aus Metallseifen, aromatischen Metallcarboxylaten, Metallphenolaten und Organozinnverbindungen und einer Verbindung der Formel I.

Eine spezielle Ausführungsform der Erfindung sieht Stabilisatorkombinationen vor, in denen auf Gewichtsteil der Verbindungen der Formel I 0,5 bis 10 Gewichtsteile Calciumseifen und/oder 0,5 bis 10 Gewichtsteile Bariumseifen und/oder 0,5 bis 10 Gewichtsteile Zinkseifen vorhanden sind, wobei sich die Seifen von Fettsäuren mit 8 bis 22 Kohlenstoffatomen ableiten. Der Gesamtanteil der genannten Metallseifen soll dabei 20 Gewichtsteile pro 1 Gewichtsteil Verbindungen der Formel I nicht überschreiten.

Als weitere Grundkomponente der erfindungsgemäßen Stabilisatorkombinationen kommen die bereits weiter oben beschriebenen Natriumalumosilikate in Betracht, die in Mengen von 0,2 bis 20 Gewichtsteilen auf 1 Gewichtsteil Verbindungen der Formel I vorhanden sein können.

Die erfindungsgemäßen Stabilisatorkombinationen können auf 1 Gewichtsteil Verbindungen der Formel I 0,2 bis 20 Gewichtsteile Verbindungen der Formeln II und/oder III

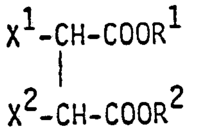

(II)

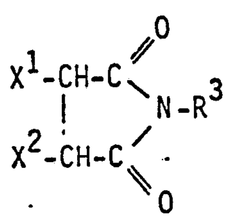

(III)

enthalten, in denen $X^1$ und $X^2$ unabhängig voneinander Wasserstoff oder die SH-Gruppe bedeuten, wobei mindestens einer der Substituenten $X^1$ und $X^2$ eine SH-Gruppe darstellt, und $R^1$, $R^2$ und $R^3$ geradkettige und verzweigte Alkylreste mit 5 bis 22 Kohlenstoffatomen, vorzugsweise 6 bis 18 Kohlenstoffatomen, bedeuten.

Bevorzugt enthalten die Stabilisatorkombinationen wenigstens ein Gleitmittel aus der Gruppe der oben definierten Partialester aus Fettsäuren und Polyolen. Dabei kann der Partialester in Mengen von 0,2 bis 5 Gewichtsteile auf 1 Gewichtsteil Verbindungen der Formel I vorhanden sein.

Die erfindungsgemäßen Stabilisatorkombinationen können gewünschtenfalls durch weitere Hilfsstoffe und Verarbeitungshilfsmittel für Polyvinylchlorid-Formmassen ergänzt werden.

Die Stabilisatorkombinationen können durch einfaches mechanisches Vermischen der Bestandteile mit Hilfe von konventionellen Mischern erhalten werden. Bei der Herstellung fallen sie im allgemeinen als rieselfähige, nichtstaubende Produkte an.

**Beispiele**

**Herstellung der Verbindungen der Formel I**

1. Natriumsalze der Brenztraubensäure

10 g (0,11 Mol) käufliche Brenztraubensäure (Merck) wurden mit 4,4 g (0,11 Mol) Natriumhydroxid in 200 ml Wasser 30 Minuten lang bei Raumtemperatur gerührt. Anschließend wurde das Wasser im Rotationsdampfer abdestilliert und das entstandene Natriumsalz bei 70°C im Ölpumpenvakuum getrocknet. Ausbeute: 11,2 g.

2. Natriumsalz der 2-Oxooctansäure
Analog Herstellungsbeispiel 1 wurden 10 g (0,063 Mol) käufliche 2-Oxooctansäure (Fluka) in das Natriumsalz überführt. Ausbeute: 11,4 g.

3. Natriumsalz der Phenylglyoxylsäure
Analog Herstellungsbeispiel 1 wurde 10 g (0,067 Mol) käufliche Phenylglyoxylsäure (Fluka) in das Natriumsalz überführt. Ausbeute: 10,9 g.

4. Natriumsalz der 3-Oxocaprylsäure
Zu einer Dispersion von 24,2 g (1,05 Grammatom) Natrium in 1200 ml Toluol wurden unter Rühren und unter Stickstoffatmosphäre 162,2 g (1,25 Mol) Ethylacetoacetat so langsam zugegeben, daß die Innentemperatur nicht über 50°C anstieg. Nach beendeter Zugabe wurde das Gemisch 90 Minuten lang bei 50°C weitergerührt. Nach dem Abkühlen des Gemisches auf ca. 10°C wurde unter Rühren im Verlauf von 30 Minuten 115 g (0,35 Mol) Capronsäurechlodrid zugetropft. Nach beendeter Zugabe wurde das Gemisch unter Rühren 15 Minuten lang auf 80°C erhitzt und dann auf zerstoßenes Eis gegossen. In dem wässrigen Gemisch wurde mit verdünnter Schwefelsäure ein pH-Wert con ca. 4 eingestellt. Nach Zugabe von 1 l Ethanol wurde die Toluolphase abgetrennt, dreimal mit Wasser/Ethanol (9 : 1) gewaschen und über Natriumsulfat getrocknet. Der beim Abdestillieren des Lösungsmitteln verbleibende Rückstand wurde mit 250 g 30-gewichtsprozentiger Natriummethylatlösung in Methanol und zusätzlich 350 ml Methanol 90 Minuten lang bei Raumtemtperatur gerührt. Das Reaktionsgemisch wurde auf zerstoßenes Eis gegossen. Mit verdünnter Schwefelsäure wurde der pH-Wert des Gemisches auf ca. 4 eingestellt. Anschließend wurde mit Ether extrahiert. Die vereinigten Etherextrakte wurden mit Wasser gewaschen, über Natriumsulfat getrocknet und eingeengt. Bei der fraktionierten Destillation des Rückstandes gingen bei 106 - 110°C/12 mbar 81,3 g 3-Oxocaprylsäuremethylester als farblose Flüssigkeit mit $n_D^{20}$ = 1,430 über.

20g (0,116 Mol) 3-Oxocaprylsäuremethylester wurden in 100 ml Ethanol gelöst und nach Zugabe von 4,6 g (0,116 Mol) Natriumhydroxid in 100 ml Wasser 2 Stunden lang unter mäßigem Erwärmen gerührt. Anschließend wurde das Wasser im Rotationsverdampfer abdestilliert und das zurückbleibende Natriumsalz bei 70°C im Ölpumpenvakuum getrochnet. Ausbeute: 7,1 g.

5. Kaliumsalz der 3-Oxopalmitinsäure
Analog Herstellungsbeispiel 4 wurde aus Myristinsäurechlorid der 3-Oxopalmitinsäuremethylester synthetisiert, der dann mit Kaliumhydroxid zum Kaliumsalz der 3-Oxopalmitinsäure verseift wurde.

6. Natriumsalz der 3-Oxoglutarsäure
Analog Herstellungsbeispiel 1 wurde 10 g (0,068 Mol) käuflich 3-Oxoglutarsäure (Fluka) in das Natriumsalz überführt. Ausbeute: 11,2 g.

**Beispiel A bis G**

Die thermoplastische Formmasse A (Vergleichszusammensetzung) wurde durch mechanisches Vermischen von

100 GT Suspensions-PVC (K-Wert 70; Vestolit® S 7054; Hersteller: Chemische Werke Hüls AG, Marl)
0,2 GT Stearinsäure
0,2 GT Paraffin, Smp. 71°C
0,5 GT Pentaerythritester der Stearinsäure (Molverhältnis 1 : 1,5; Hydroxylzahl 212)

(GT = Gewichtsteile) mit der Stabilisatorkombination A' aus

1,0 GT Calciumstearat
0,5 GT Zinkstearat

erhalten.

Für die Herstellung der erfindugsgmäßen Polyvinylchlorid-Formmassen B bis G wurde die Stabilisatorkombination A' durch Zusatz von jeweils 0,5 GT Verbindungen der Formel I zu den Stabilisatormischungen B' bis G' abgewandelt. Als Verbindungen der Formel I wurden eingearbeitet:

In B': Natriumsalz der Brenztraubensäure (Herstellungsbeispiel 1)
In C': Natriumsalz der 2-Oxooctansäure (Herstellungsbeispiel 2)
In D': Natriumsalz der Phenylglyoxylsäure (Herstellungsbeispiel 3)
In E': Natriumsalz der 3-Oxocaprylsäure (Herstellungsbeispiel 4)
In F': Kaliumsalz der 3-Oxopalmitinsäure (Herstellungsbeispiel 5)
In G': Dinatriumsalz der 3-Oxoglutarsäure (Herstellungsbeispiel 6)

Die Zusammensetzungen der auf diese Weise erhaltenen stabilisierten Polyvinylchlorid-Formmassen A bis G können der nachstehenden Tabelle entnommen werden.

Die stabilisierende Wirkung der Kombinationen A' bis G' in den entsprechenden Polyvinylchlorid-Formmassen A bis G wurde anhand der "statischen Thermostabilität" von Walzfellen geprüft. Zu diesem Zweck wurden die Formmassen auf einem Laborwalzwerk der Abmessungen 350 x 150 mm (Fa. Schwabenthan) bei einer Walzentemperatur von 170° C und einer Walzendrehzahl von 300 Upm im Gleichlauf von 5 Minuten zu Prüffellen verarbeitet. Die ca. 0,5 mm dicken Felle wurden zu quadratischen Probestücken mit mm Kantenlänge zerschnitten, die anschließend in einem Trockenschrank mit 6 rotierenden Horden (Heraeus FT 420 R) einer Temperatur von 180° C ausgesetzt wurden. Im Abstand von 10 Minuten wurden Proben entnommen und deren Farbänderung begutachtet. In der nachstehenden Tabelle 1 ist jeweils der Zeitraum angegeben, nach dem der Test wegen zu starker Verfärbung (Stabilitätsabbruch) beendet wurde.

**Tabelle**

| Bestandteil (GT) | Polyvinylchlorid-Formmasse | | | | | | |
|---|---|---|---|---|---|---|---|
| | A | B | C | D | E | F | G |
| Susoensions-PVC | 100 | 100 | 100 | 100 | 100 | 100 | 100 |
| Calciumstearat | 1,0 | 1,0 | 1,0 | 1,0 | 1,0 | 1,0 | 1,0 |
| Zinkstearat | 0,5 | 0,5 | 0,5 | 0,5 | 0,5 | 0,5 | 0,5 |
| Stearinsäure | 0,2 | 0,2 | 0,2 | 0,2 | 0,2 | 0,2 | 0,2 |
| Paraffin | 0,2 | 0,2 | 0,2 | 0,2 | 0,2 | 0,2 | 0,2 |
| Pentaerythriststearinsäureester | 0,5 | 0,5 | 0,5 | 0,5 | 0,5 | 0,5 | 0,5 |
| Brenztraubensäure, Na-Salz | - | 0,5 | - | - | - | - | - |
| 2-Oxooctansäure, Na-Salz | - | - | 0,5 | - | - | - | - |
| Phenylglyoxylsäure, Na-Salz | - | - | - | 0,5 | - | - | - |
| 3-Oxocaprylsäure, Na-Salz | - | - | - | - | 0,5 | - | - |
| 3-Ocopalmitinsäure, Na-Salz | - | - | - | - | - | 0,5 | - |
| 3-Oxoglutarsäure, Di-Na-Salz | - | - | - | - | - | - | 0,5 |
| Stabilitätsabbruch (min) | 40 | 70 | 60 | 60 | 80 | 70 | 70 |

**Beispiele H - M**

Durch mechanisches Vermischen der Komponenten wurden folgende Stabilisatorkombinationen hergestellt;

H': 1,0 GT Calciumstearat
0,5 GT Zinkstearat
0,5 GT Natriumsalz der 2-Oxooctansäure (Herstellungsbeispiel 2)
0,5 GT Natriumalumosilikat

I': 1,0 GT Calciumstearat
0,5 GT Zinkstearat
0,5 GT Natriumsals der Phenylglyoxylsäure (Herstellungsbeispiel 3)
0,5 GT Natriumalumosilikat

J': 1,0 GT Calciumstearat
0,5 GT Zinkstearat
0,5 GT Natriumsalz der 3-Oxocaprylsäure (Herstellungsbeispiel 4)
0,5 GT Natriumalumosilikat

K': 1,0 GT Calciumstearat
0,5 GT Zinkstearat
0,5 GT Natriumsalz der 2-Oxooctansäure (Herstellungsbeispiele 2)
0,5 GT Mercaptobernsteinsäuredidecylester

L': 1,0 GT Calciumstearat
0,5 GT Zinkstearat
0,5 GT Natriumsalz der Phenylglyoxylsäure (Herstellungsbeispiel 3)
0,5 GT Mercaptobernsteinsäuredidecylester

M': 1,0 GT Calciumstearat
0,5 GT Zinkstearat
0,5 GT Natriumsalz der 3-Oxocaprylsäure (Herstellungsbeispiel 4)
0,5 GT Mercaptobernsteinsäuredidecylester

In den Stabilisatorkombinationen H', I' und J' wurde als Natriumalumosilikat ein feinteiliger synthetischer Zeolith NaA ($Na_2O : Al_2O_3 : SiO_2 = 0,9 : 1 : 2,4$; Wassergehalt 19 Gewichtsprozent) eingesetzt.

Die thermoplastischen Formmassen H bis M wurden durch mechanisches Vermischen von jeweils 2,5 GT der Stabilisatorkombinationen H' bis M' mit

100 GT Suspensions-PVC (K-Wert 70; Vestolit® S 7054; Hersteller: Chemische Werke Hüls AG, Marl)
0,2 GT Stearinsäure
0,2 GT Paraffin, Smp. 71°C
0,5 GT Pentaerythritester der Stearinsäure (Molverhältnis 1 : 1,5; Hydroxylzahl 212)

erhalten. Die Zusammensetzungen der stabilisierten Polyvinylchloridformmassen massen H bis M können der nachstehenden Tabelle 2 entnommen werden.

Die stabilisierende Wirkung der Kombinationen H' bis M' in den entsprechenden PVC-Formmassen H bis M wurde wiederum anhand der "statischen Thermostabilität" von Walzfellen geprüft. In der Tabelle 2 ist jeweils der Zeitraum angegeben, nach dem die erste Verfärbung der Proben beobachtet wurde (0 min bedeutet, daß die erste Verfärbung schon vor der thermischen Behandlung vorhanden war) und weiterhin der Zeitraum, nach dem der Test wegen zu starker Verfärbung (Stabilitätsabbruch) beendet wurde.

**Tabelle 2**

| Bandstandteil (GT) | Polyvinylchlorid-Formmasse | | | | | |
|---|---|---|---|---|---|---|
| | H | I | J | K | L | M |
| Suspensions-PVC | 100 | 100 | 100 | 100 | 100 | 100 |
| Calciumstearat | 1,0 | 1,0 | 1,0 | 1,0 | 1,0 | 1,0 |
| Zinkstearat | 0,5 | 0,5 | 0,5 | 0,5 | 0,5 | 0,5 |
| Stearinsäure | 0,2 | 0,2 | 0,2 | 0,2 | 0,2 | 0,2 |
| Paraffin | 0,2 | 0,2 | 0,2 | 0,2 | 0,2 | 0,2 |
| Pentaerythritstearinsäure | 0,5 | 0,5 | 0,5 | 0,5 | 0,5 | 0,5 |
| 2-Oxooctansäure, Na-Salz | 0,5 | - | - | 0,5 | - | - |
| Phenylglyoxylsäure, Na-Salz | - | 0,5 | - | - | 0,5 | - |
| 3-Oxocaprylsäure, Na-Salz | - | - | 0,5 | - | - | 0,5 |
| Natriualumosilikat | 0,5 | 0,5 | 0,5 | - | - | - |
| Mercaptobernsteinsäuredidecylester | - | - | - | 0,5 | 0,5 | 0,5 |
| erste Verfärbung (min) | 0 | 0 | 0 | 10 | 10 | 10 |
| Stabilitätsabbruch (min) | 90 | 90 | 100 | 90 | 90 | 90 |

**Patentansprüche**

1. Stabilisierte Polyvinylchlorid-Formmassen enthaltend eine Stabilisatorkombination aus (1) Primärstabilisatoren ausgewählt aus der Gruppe bestehend aus Metallseifen, aromatischen Metallcarboxylaten, Metallphenolaten und Organozinnvervindungen und (2) Costabilisatoren sowie übliche Gleitmittel dadurch gekennzeichnet, daß sie Verbindungen der Formel I

$$R-\overset{\displaystyle O}{\overset{\|}{C}}-(CH_2)_n-COOM$$

in der R eine Alkylrest mit 1 bis 19 Kohlenstoffatomen, einen Cycloalkylrest mit 5 oder 6 Kohlenstoffatomen, einen Phenylrest, einen Alkylphenylrest mit 7 oder 11 Kohlenstoffatomen oder einen $MOOC-CH_3$-Rest, n die Zahlen 0 und 1 und M Lithium, Natrium oder Kalium bedeutet, als Costabilisatoren enthalten.

2. Stabilisierte Polyvinylchlorid-Formmassen nach Anspruch 1, dadurch gekennzeichnet, daß sie auf 100 Gewichtsteile Polymerisat 0,02 bis 5 Gewichtsteile Verbindungen der Formel I enthalten.

3. Stabilisierte Polyvinylchlorid-Formmassen nach den Ansprüchen 1 und 2, dadurch gekennzeichnet, daß sie auf 100 Gewichtsteile Polymerisat 0,1 bis 3 Gewichtsteile Calciumseifen und/oder 0,1 bis 3 Gewichtsteile Bariumseifen und/oder 0,1 bis 3 Gewichtsteile Zinkseifen enthalten, wobei sich die Seifen von Fettsäuren mit 8 bis 22 Kohlenstoffatomen ableiten.

4. Stabilisierte Polyvinylchlorid-Formmassen nach den Ansprüchen 1 bis 3, dadurch gekennzeichnet, daß sie auf 100 Gewichtsteile Polymerisat 0,2 bis 5 Gewichtsteile eines synthetischen, kristallinen, 13 bis 25 Gewichtsprozent gebundenes Wasser enthaltenden, feinteiligen Natriumalumosilikats enthalten, das - bezogen auf die wasserfreie Form - die Zusammensetzung

$0{,}7 - 1{,}1\ Na_2O \cdot Al_2O_3 - 1{,}3 - 2{,}4\ SiO_2$ hat.

5. Stabilisierte Polyvinylchlorid-Formmassen nach den Ansprüchen 1 bis 4, dadurch gekennzeichnet, daß sie auf 100 Gewichtsteile Polymerisat 0,2 bis 5 Gewichtsteile Verbindungen der Formeln II und/oder III

$$\begin{array}{l} X^1-CH-COOR^1 \\ \quad\;\; | \\ X^2-CH-COOR^2 \end{array} \qquad (II)$$

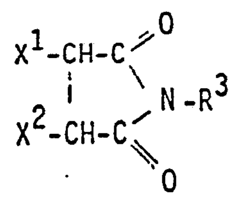

(III)

enthalten, in denen $X^1$ und $X^2$ unabhängig voneinander Wasserstoff oder die SH-Gruppe bedeuten, wobei mindestens einer der Substituenten $X^1$ und $X^2$ eine SH-Gruppe darstellt und in denen $R^1$, $R^2$ und $R^3$ geradkettige und verzweigte Alkylreste mit 5 bis 22 Kohlenstoffatomen, vorzugsweise 6 bis 10 Kohlenstoffatomen, bedeuten.

6. Stabilisatorkombinationen für Polyvinylchlorid-Formmassen, enthaltend Primärstabilisatoren ausgewählt aus der Gruppe bestehend aus Metallseifen, aromatischen Metallcarboxylaten, Metallphenolaten und Organozinnverbindungen und Costabilisatoren dadurch gekennzeichnet, daß sie als Costabilisatoren Verbindungen der Formel I in Anspruch 1 enthalten.

7. Stabilisatorkombinationen nach Anspruch 6, dadurch gekennzeichnet, daß sie auf 1 Gewichtsteil Verbindungen der Formel I 0,5 bis 10 Gewichtsteile Calciumseifen und/oder 0,5 bis 10 Gewichtsteile Bariumseifen und/oder 0,5 bis 10 Gewichtsteile Zinkseifen enthalten, wobei sich die Seifen von Fettsäuren mit 8 bis 22 Kohlenstoffatomen ableiten und der Gesamtanteil der Metallseifen 20 Gewichtsteile pro Gewichtsteil Verbindungen der Formel I nicht überschreitet.

8. Stabilisatorkombination für Polyvinylchlorid-Formmassen nach den Ansprüchen 6und 7, dadurch gekennzeichnet, daß sie auf 1 Gewichtsteil Verbindung der Formel I in Anspruch 1 0,2 bis 20 Gewichtsteile eines synthetischen, kristallinen, 13 bis 25 Gewichtsprozent gebundenes Wasser enthaltenden, feinteiligen Natriumalumosilikats enthalten, das - bezogen auf die wasserfreie Form - die Zusammensetzung 0,7 - 1,1 $Na_2O$ · $Al_2O_3$ · 1,3 - 2,4 $SiO_2$ hat.

9. Stabilisatorkombination für Polyvinylchlorid-Formmassen nach den Ansprüchen 6 - 8, dadurch gekennzeichnet, daß sie auf 1 Gewichtsteil Verbindung der Formel I in Anspruch 1 0,2 bis 20 Gewichtsteile Verbindungen der Formeln II und/oder III

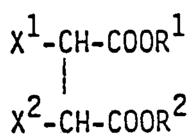

(II)

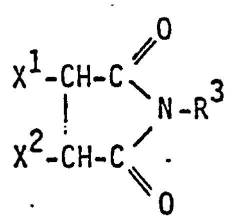

(III)

enthalten, in denen $X^1$ und $X^2$ unabhängig voneinander Wasserstoff oder die SH-Gruppe bedeuten, wobei mindestens einer der Substituenten $X^1$ und $X^2$ eine SH-Gruppe darstellt und $R^1$, $R^2$ und $R^3$ geradkettige und verzweigte Alkylreste mit 5 bis 22 Kohlenstoffatomen, vorzugsweise 6 bis 10 Kohlenstoffatomen, bedeuten.

**Claims**

1. Stabilized polyvinyl chloride moulding compositions containing a stabilizer combination of (1) primary stabilizers selected from the group comprising metal soaps, aromatic metal carboxylates, metal phenolates and organotin compounds and (2) costabilizers and standard lubricants, characterized in that they contain compounds corresponding to the following formula I

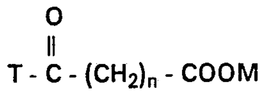 (I)

in which

R is a $C_1$-$C_{19}$ alkyl radical, a $C_5$ or $C_6$ cycloalkyl radical, a phenyl radical, a $C_7$-$C_{11}$ alkylphenyl radical or an MOOC-$CH_2$ radical, n is the number 0 or 1 and M is lithium, sodium or potassium, as costabilizers.

2. Stabilized polyvinyl chloride moulding compositions as claimed in claim 1, characterized in that they contain 0.02 to 5 parts by weight of the compounds of formula 1 to 100 parts by weight of polymer.

3. Stabilized polyvinyl chloride moulding compositions as claimed in claims 1 and 2, characterized in that they contain 0.1 to 3 parts by weight calcium soaps and/or 0.1 to 3 parts by weight barium soaps and/or 0.1 to 3 parts by weight zinc soaps to 100 parts by weight polymer, the soaps being derived from $C_8$-$C_{22}$ fatty acids.

4. Stabilized polyvinyl chloride moulding compositions as claimed in claims 1 to 3, characterized in that they contain 0.2 to 5 parts by weight of a synthetic, crystalline, finely divided sodium alumosilicate containing 13 to 25 percent by weight bound water which in the anhydrous form, has the composition 0.7 1.1 $Na_2O \cdot Al_2O_3 \cdot$ 1.3 - 2.4 $SiO_2$ to 100 parts by weight polymer.

5. Stabilized polyvinyl chloride moulding compositions as claimed in claims 1 to 4, characterised in that they contain 0.2 to 5 parts by weight of compounds corresponding to formulae II and/or III below

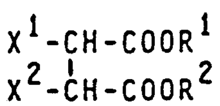 (II)

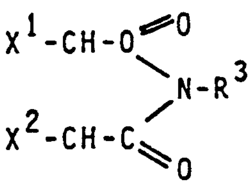 (III)

in which

$X^1$ and $X^2$ independently of one another represent hydrogen or the SH group, at least one of the substituents $X^1$ and $X^2$ being an SH group, and

$R^1$, $R^2$ and $R^3$ are linear or branched alkyl radicals containing to 22 carbon atoms and preferably 6 to 18 carbon atoms, to 100 parts by weight polymer.

6. Stabilizer combinations for polyvinyl chloride moulding compos it ions containing primary stabilizers selected from the group comprising metal soaps, aromatic metal carboxylates, metal phenolates and organotin compounds and costabilizers, characterized in that they contain compounds corresponding to formula I in claim 1 as costabilizers.

7. Stabilizer combinations as claimed in claim 6, characterized in that they contain 0.5 to 10 parts by weight calcium soaps and/or 0.5 to 10 parts by weight barium soaps and/or 0.5 to 10 parts by weight zinc soaps to 1 part by weight of the compounds of formula I, the soaps being derived from fatty acids containing 8 to 22 carbon atoms and the total quantity of metal soaps not exceeding 20 parts by weight per part by weight compounds of formula I.

8. A stabilizer combination for polyvinyl chloride moulding compositions as claimed in claims 6 and 7, characterized in that they contain 0.2 to 20 parts by weight of a synthetic, crystalline, finely divided sodium alumosilicate containing 13 to 25 percent by weight bound water which, in the anhydrous form, has the composition 0.7 - 1.1 $Na_2O \cdot Al_2O_3 \cdot$ 1.3 - 2.4 $SiO_2$ to 1 part by weight of the compound of formula I in claim 1.

9. A stabilizer combination for polyvinyl chloride moulding compositions as claimed in claims 6 to 8, characterized in that they contain 0.2 to 20 parts by weight of compounds corresponding to formulae II and/or III below

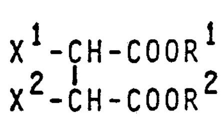 (II)

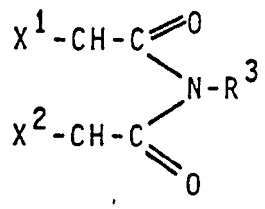

(III)

in which

$X^1$ and $X^2$ independently of one another represent hydrogen or the SH group, at least one of the substituents $X^1$ and $X^2$ being an SH group, and

$R^1$, $R^2$ and $R^3$ represent linear and branched alkyl radicals containing from 5 to 22 carbon atoms and preferably from 6 to 18 carbon atoms.

**Revendications**

1. Matières à mouler stabilisées de chlorure de polyvinyle contenant une combinaison de stabilisants comprenant (1) des stabilisants primaires choisis parmi le groupe comprenant des savons de métaux, des carboxylates aromatiques de métaux, des phénolates de métaux et des composés d'organo-étain, et (2) des costabilisants, ainsi que des agents lubrifiants habituels, caractérisées en ce qu'elles contiennent des composés de formule I :

$$R-\overset{\overset{O}{\|}}{C}-(CH_2)_n-COOM \qquad (I)$$

dans laquelle R représente un radical alkyle contenant 1 à 19 atomes de carbone, un radical cycloalkyle contenant 5 ou 6 atomes de carbone, un radical phényle, un radical alkylphényle contenant 7 à 11 atomes de carbone ou un radical $MOOC-CH_2-$, n représente les nombres 0 et 1 et M représente le lithium, le sodium ou le potassium, comme costabilisants.

2. Matières à mouler stabilisées de chlorure de polyvinyle selon la revendication 1, caractérisées en ce que, pour 100 parties en poids de polymère, elles contiennent 0,02 à 5 parties en poids de composés de formule I.

3. Matières à mouler stabilisées de chlorure de polyvinyle selon les revendications 1 et 2, caractérisées en ce que, pour 100 parties en poids de polymère, elles contiennent 0,1 à 3 parties en poids de savons de calcium et/ou 0,1 à 3 parties en poids de savons de baryum et/ou 0,1 à 3 parties en poids de savons de zinc, les savons dérivant d'acides gras contenant 8 à 22 atomes de carbone.

4. Matières à mouler stabilisées de chlorure de polyvinyle selon les revendications 1 à 3, caractérisées en ce que, pour 100 parties en poids de polymère, elles contiennent 0,2 à 5 parties en poids d'un aluminosilicate de sodium synthétique, cristallin, finement divisé, contenant 13 à 25 % en poids d'eau fixée et ayant, rapporté à la forme anhydre, la composition suivante :

$0{,}7\text{-}1{,}1\ Na_2O \cdot Al_2O_3 \cdot 1{,}3\text{-}2{,}4\ SiO_2$.

5. Matières à mouler stabilisées de chlorure de polyvinyle selon les revendications 1 à 4, caractérisées en ce que, pour 100 parties en poids de polymère, elles contiennent 0,2 à 5 parties en poids de composés répondant aux formules II et/ou III :

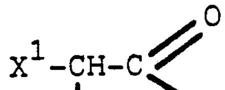

(II)

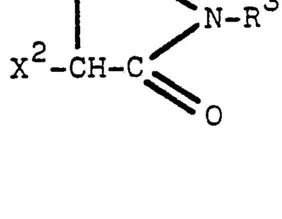

(III)

dans lesquelles $X^1$ et $X^2$ représentent chacun indépendamment l'un de l'autre un atome d'hydrogène ou le groupe SH, au moins un des substituants $X^1$ et $X^2$ représentant un groupe SH, tandis que $R^1$, $R^2$ et $R^3$ représentent des radicaux alkyle à chaîne droite et ramifiée contenant 5 à 22 atomes de carbone, de préférence, 6 à 18 atomes de carbone.

6. Combinaisons de stabilisants pour matières à mouler de chlorure de polyvinyle, contenant des stabilisants primaires choisis parmi le groupe comprenant des savons de métaux, des carboxylates aromatiques de métaux, des phénolates de métaux et des composés d'organo-étain, ainsi que des costabilisants, caractérisées en ce que, comme costabilisants, elles contiennent des composés de formule I selon la revendication 1.

7. Combinaisons de stabilisants selon la revendication 6, caractérisées en ce que, pour 1 partie en poids de composés de formule I, elles contiennent 0,5 à 10 parties en poids de savons de calcium et/ou 0,5 à 10 parties en poids de savons de baryum et/ou 0,5 à 10 parties en poids de savons de zinc, les savons dérivant d'acides gras contenant 8 à 22 atomes de carbone, tandis que la quantité totale des savons de métaux ne dépasse pas 20 parties en poids par partie en poids de composés de formule I.

8. Combinaison de stabilisants pour matières à mouler de chlorure de polyvinyle selon les revendications 6 et 7, caractérisée en ce que, pour 1 partie en poids d'un composé de formule 5 selon la revendication 1, elle contient 0,2 à 20 parties en poids d'un aluminosilicate de sodium synthétique, cristallin, finement divisé, contenant 13 à 25 % en poids d'eau fixée et ayant, rapporté à la forme anhydre, la composition suivante :

$0,7 - 1,1\ Na_2O \cdot Al_2O_3 \cdot 1,3 - 2,4\ SiO_2$.

9. Combinaison de stabilisants pour matières à mouler de chlorure de polyvinyle selon les revendications 6 - 8, caractérisée en ce que, pour 1 partie en poids d'un composé de formule 5 selon la revendication 1, elle contient 0,2 à 20 parties en poids de composés répondant aux formules II et/ou III

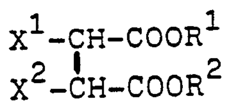

(II)

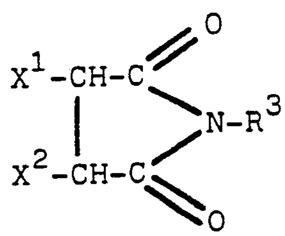

(III)

dans lesquelles $X^1$ et $X^2$ représentent chacun indépendamment l'un de l'autre un atome d'hydrogène ou le groupe SH, au moins un des substituants $X^1$ et $X^2$ représentant un groupe SH, tandis que $R^1$, $R^2$ et $R^3$ représentent des radicaux alkyle à chaîne droite et ramifiée contenant 5 à 22 atomes de carbone, de préférence, 6 à 18 atomes de carbone.